# EUROPEAN PATENT APPLICATION

(11) **EP 1 429 033 A1**
(43) Date of publication of application: **16.06.2004**
(21) Application number: 03257830.4
(22) Date of filing: 12.12.2003
(51) Int. Cl.: F04D 29/34, F03B 3/12

(54) **Mounting jig**

(30) Priority: 13.12.2002 NO 20026020
(71) Applicant: Small Turbine Partner AS, 7075 Tiller (NO)
(72) Inventor: Brekke, Hermod, 7026 Trondheim (NO); Grillstad, Joar, 7224 Melhus (NO)
(74) Representative: Howe, Steven

(57) **Abstract**

Mounting jig or fixture for fastening vanes and blades on runners or impellers in turbines, rotors in pumps, compressors and fans, etc., wherein vanes or blades (7) shall be placed with a given angle in relation to the tangent of a pitch circle which is defined by a radially inner respectively outer edge portion or point on each of the vanes/blades, and which has its centre on the rotational axis of the runner. The jig comprises a main spindle (1) adapted to be positioned to coincide with said rotational axis, and there is provided a transverse spindle (3) extending laterally from the main spindle and attached thereto by an angle head (2), and the transverse spindle (3) supports a fixing head (4) having a general plane (10) lying perpendicular to (normal to) the transverse spindle and at a given radial distance from the axis of the main spindle (1). The fixing head (4) comprises attachment means (6) for well-defined fixing of a vane (7).

## Description

This invention relates to a mounting jig or fixture for fastening vanes and blades on runners or impellers in turbines, rotors in pumps, compressors and fans, etc., wherein vanes and blades are placed with a given angle in relation to the tangent of a pitch circle which is defined by a radially inner, respectively outer, edge portion or point on each of the vanes/blades, and which has its centre on a rotational axis of the runner.

In the present description mounting or fastening vanes on runners or impellers in water turbines will mainly be taken as a starting point, but it is also clear that blade-like rotor parts on other types of machines and equipment, such as for example the above-mentioned, may be mounted by means of the mounting jig or fixture according to the invention.

In the type of machines that is of interest here, mounting or fastening vanes or blades is often a quite complicated operation that is problematic because of the quite intricate geometrical relationships that can occur. Typical marking in advance on the workpiece concerned, such as turbine runners or impellers, is very demanding and substantially contributes to the cost of such structures or constructions.

According to the present invention, a mounting jig for fastening vanes and blades on runners in turbines, rotors in pumps, compressors and fans, etc., in which the vanes or blades are to be placed with a given angle in relation to the tangent of a pitch circle (R1,R2) which is defined by a radially inner respectively outer edge portion or point on each of the vanes/blades, and which has its centre on the rotational axis of the runner,
is characterised in that:
the jig comprises a main spindle (1) arranged to be positioned to coincide with the rotational axis;
there is provided a transverse spindle (3) extending laterally from the main spindle (1) and attached thereto by an angle head (2);
the transverse spindle (3) supports a fixing head (4) having a general plane (10) lying perpendicular to (normal to) the transverse spindle and at a given radial distance (A) from the axis of the main spindle (1); and,
the fixing head (4) comprises attachment means (6) for fixing of a vane/blade with the radially inner respectively outer edge portion/point at a given distance (B) from the axis of the transverse spindle (3) and measured in a plane perpendicular to (normal to) the axis of the main spindle (1).

The mounting jig according to the invention, as defined in the patent claims and described in more detail below in the form of an exemplary embodiment, can achieve a substantial rationalisation and labour-saving in connection with mounting or fastening vanes or blades of the sort mentioned above. In principle the mounting jig can be made for a predetermined structure or design with given dimensions and geometrical relationships, but it is a considerable advantage of the preferred embodiments of the jig according to the invention, that this, in several respects, is adjustable so that the same mounting jig could be used on different runners with different dimensions and geometries. This is an obvious advantage since the mounting jig, particularly for bigger dimensions of the runner, will represent quite an advanced and expensive tool.

The invention shall be explained more closely below with reference to the drawings, where:
- Figure 1: shows a plane view of a simplified example of a runner having a full set of vanes during mounting by means of an embodiment of the jig according to the invention,
- Figure 2: shows the example on fig. 1, seen in elevation and partial cross-section,
- Figure 3: shows schematically (in one quadrant) geometrical relationships at mounting a straight vane based on use of an edge portion or point at the vane's smallest radius, for fixing by means of the jig,
- Figure 4: shows schematically, in a corresponding way as figure 3, geometrical relationships at mounting a straight vane based on use of an edge portion or point at the vane's biggest radius, for fixing by means of the jig,
- Figure 5: shows in a corresponding way as figure 3, geometrical relationships at mounting a curved vane based on use of an edge portion or point at the vane's smallest radius, for fixing by means of the jig,
- Figure 6: shows in a corresponding way as figure 3, geometrical relationships at mounting a curved vane based on use of an edge portion or point at the vane's biggest radius, for fixing by means of the jig,
- Figure 7: shows schematically, in connection with the above figures 3-6, the simple case with a purely radial turbine, where a radial vane is placed between the runner's boss or hub and ring,
- Figure 8: is a schematic illustration like the one on fig. 7, but where it is a matter of a radial/axial vane so that there will be a conical or curved contour at the vane end, and fixing at the smallest radius of the vane, and
- Figure 9: shows in a corresponding way as figure 8, a situation where it is also a matter of a radial/axial vane fixed at the biggest radius of the vane, that is at a radially outer edge portion or point on this.

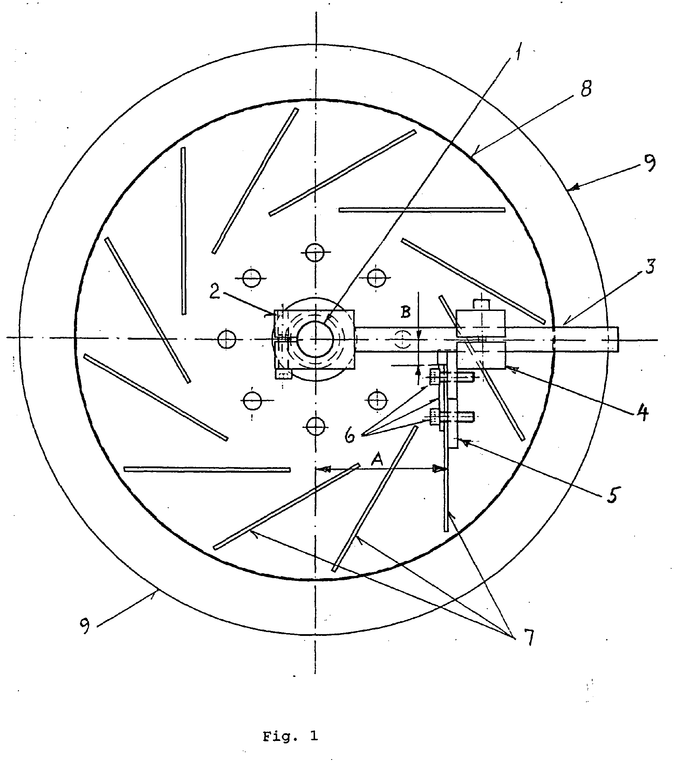

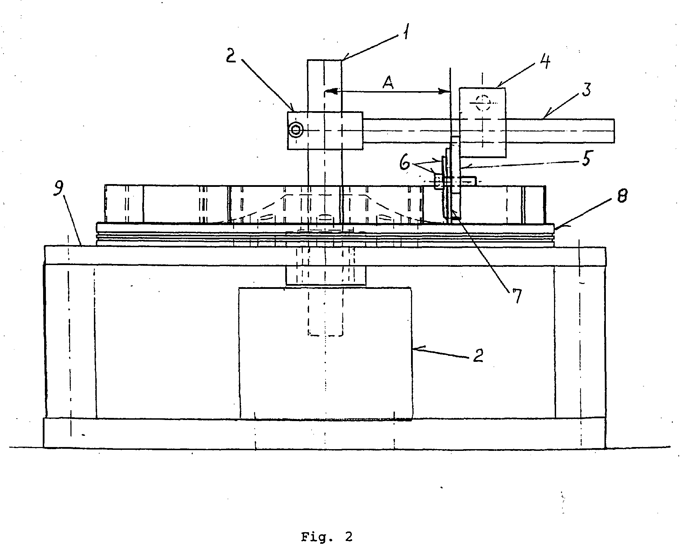

The mounting jig of the example on figures 1 and 2 is shown in connection with a relatively simple shape of a runner, namely a runner in a radial turbine where the runner vanes are straight. A number of vanes 7 are fastened to a hub disk or ring 8, where the actual fastening after fixing by means of the jig, can be done by welding, soldering or other fastening methods. The hub disk 8 is shown here placed by means of clamps or the like on a worktable 9 which can form a main part of the entire mounting equipment or jig. In principle it is however possible to omit this planar worktable as an integrated part of the mounting jig, since considering the circumstances it can be fixed in a correct position directly on or in the runner's hub disk, boss or hub, or the like. In any case a main spindle 1 in the jig must be placed to coincide with the rotational axis of the runner which is to be provided with vanes. In case of a worktable 9 as a main part of the mounting jig, the runner will be clamped with its main spindle 1 perpendicular to (normal to) and preferably centred on the plane of the table.

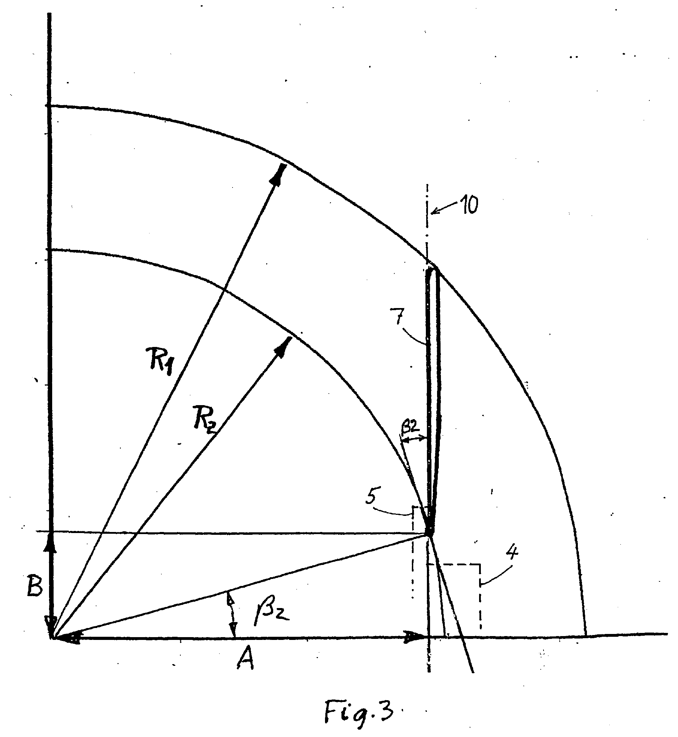

In the embodiment on fig. 1 the jig can be considered to be based on the geometry that is more closely illustrated on fig. 3, namely by fixing each vane based on its smallest radius, namely at the radially inner edge portion or point on the vane. This portion or point defines a pitch circle (R2 on fig. 3) which is consequently common for all vanes on the runner concerned. Each vane shall be placed with a given angle (β₂) in relation to the tangent of the pitch circle, as is evident from fig. 3.

As is further appears from figures 1 and 2, there is provided a transverse spindle 3 which is supported by the main spindle 1 by means of an angle head 2, so that the transverse spindle 3 preferably extends perpendicular to the main spindle, and the axes of the two spindles lie in the same plane. The transverse spindle 3 provided with a fixing head 4 on its side which preferably is adjustable along the transverse spindle. Further it can be an advantage that the fixing head 4 is rotatable and adjustable about the axis of the transverse spindle. An important feature is that the fixing head 4 defines a general plane 10 which on figures 1 and 2 corresponds to a fixing plate 5, as this plane lies perpendicular to (normal to) the transverse spindle 3. The fixing head 4 and the plate 5 are shown with dotted lines in fig. 3 together with the related general plane 10.

The fixing head 4 with the plate member 5 serves to support and fix the individual vanes 7 during the fastening on the runner. For this purpose there is shown in figure 1 and 2 fastening means, for example in the form of bolts 6, to hold each vane 7 in a well-defined and stable position during the fastening, where this position coincides with or is based on said general plane 10 which is established by the fixing head 4.

With regard to the angle head 2, it is an advantage that this head is displaceable along the main spindle 1 for fixing at a selected height above the runner disk 8 or the worktable 9. Further an important feature of the invention is that the angle head 2, or possibly the support of the main spindle 1, comprises means for indexed angle adjustment about the vertical axis corresponding to the rotational axis of the runner for fixing successive vanes 7 in angle positions being dependant on the structure or design. When such a mechanism for fixing these angle positions is incorporated in the angle head 2, this can just as well be described as "a dividing head".

As regards turbine structures or designs with smaller dimensions, the mounting jig, as illustrated on figures 1 and 2, can be based on manual power to manipulate such as screws or bolts in order to adjust the heads 2 and 4, possibly with a wheel or the like for adjusting the angle positions. On turbines and other structures or constructions, which can be quite big and heavy, the mounting jig however can be provided with hydraulic or electric driven manoeuvring means for the necessary rotational and translational movements, and also correspondingly operated locking devices for fixing in the desired permanent positions and angle positions. This, for example, will be necessary in case of water turbines where each vane can weigh several tons. It will also be seen that the mounting jig, as described here, can make possible automated or mechanized welding procedures by appropriate control of the movable parts included in the mounting jig. Among other things in such a context, it can be advantageous to arrange the fixing or plate member 5 to be replaceable and preferably adjustable on the fixing head 4.

As regards the fundamental geometry of the described mounting jig, reference is first made to fig. 3 of the drawings. This corresponds to the relatively simple example illustrated on figures 1 and 2, namely with straight vanes. Fig. 3 shows a single straight vane 7, where its radially inner edge portion or point is located on the pitch circle of radius R₂. Origin in this diagram is in accordance with the axis of the main spindle 1, corresponding to the centre of the pitch circle.

The principle of fixing the vane 7 before fastening on the runner, consists in holding the vane so that the distances A and B and the angle β₂ are correct pursuant to the design of the runner concerned. Distance A is determined by adjusting the fixing head 4 along the transverse spindle 3, while distance B is determined by fixing the vane 7 on the fixing head 4 by means of the fixing plate 5, so that the radially inner point on the vane is at distance B from the axis of the transverse spindle. Consequently the angle β₂ will also be completely determined, corresponding to the angle between the vane surface and the tangent of the pitch circle R₂ in said radially inner point on the vane. By determination of the geometrical relationships in this way, the angle and radius on the high pressure side of the vane in a runner for water power turbines will thus also be correct. As it will be evident from the following, this is applicable for both a straight and a curved vane when the geometry of the structure is correct from the outset.

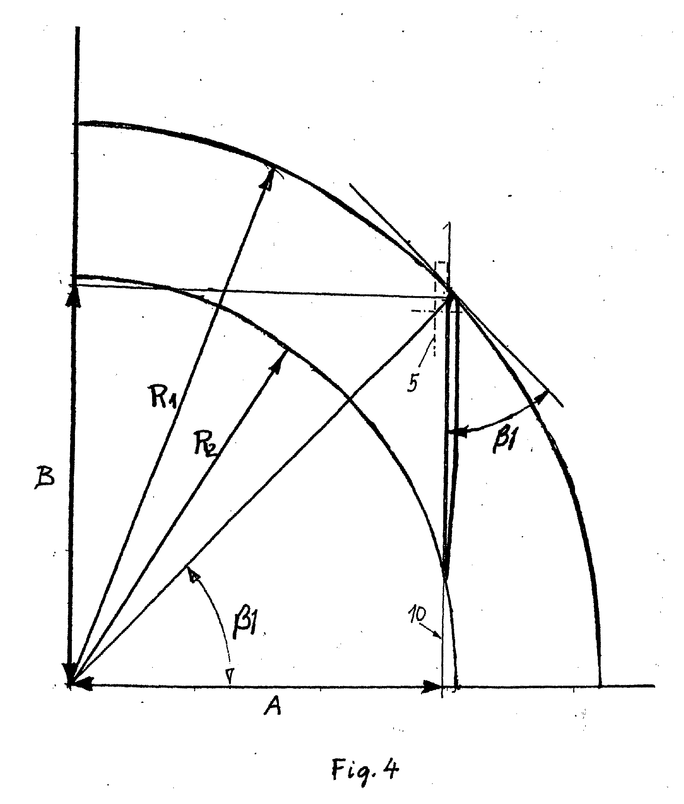

Fig. 4 shows that entirely corresponding correct fixing is achieved on the basis of holding onto the biggest radius of the vane, that is the radially outer edge portion or point which defines a pitch circle R₁ with appurtenant distances A and B and also angle β₁ between the vane surface (straight vane) and the tangent of the pitch circle R₁ in the determining point. It is evident from fig. 4 that the distance B, which is to be established by the fixing head with its fixing plate 5, is considerably bigger than in the case on fig. 3.

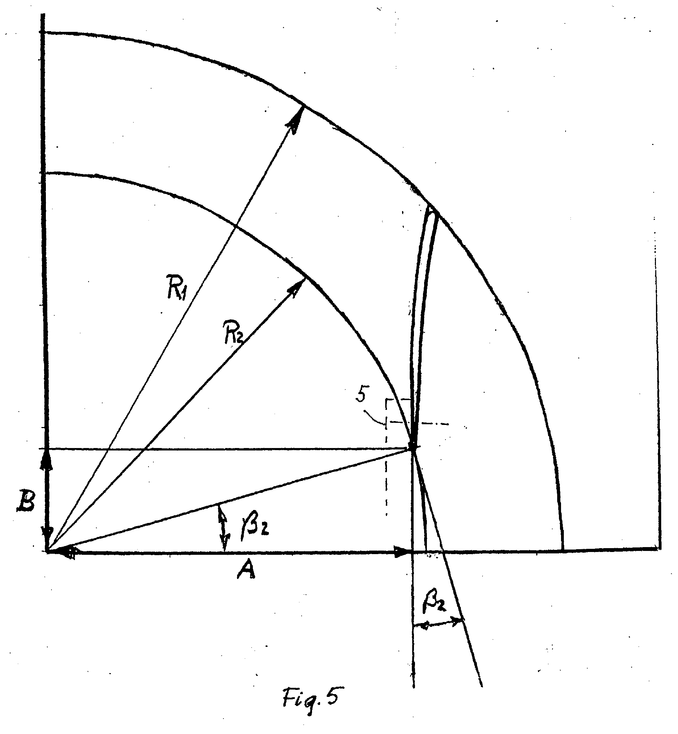

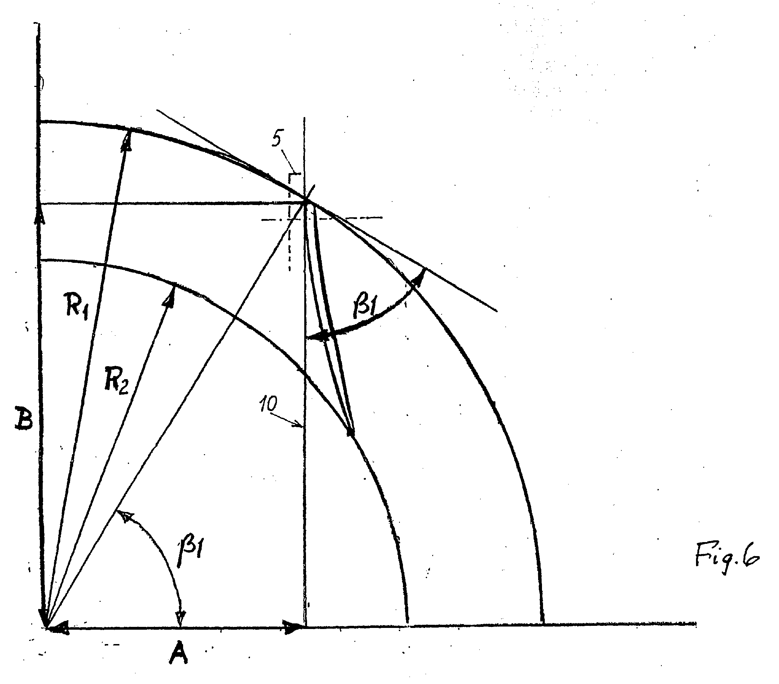

Situations corresponding to figures 3 and 4 respectively, are illustrated on figures 5 and 6 when the vane shape is curved, possibly double-curved. In these cases it is more important that the vane portion near the smallest radius (fig. 5) and the biggest radius (fig. 6) respectively, is based on fastening to the fixing plate 5 and consequently the accordance with the above-mentioned general plane 10.

In connection with water turbines it will be seen that the above mentioned angle β₂ is that which is usually described as the outlet angle. When using the mounting jig according to the invention the outlet angle β₂ will thus also be correct in case of vanes that are double-curved and will have an angle of inclination perpendicular to (normal to) the vane plane, possibly also by welding or other fastening of the vane to a conical or double-curved and rotation symmetrical surface on the runner's boss or the like. The vane angle both on the inlet side, which for turbines is the high pressure side, having radius R₁, and the low pressure side (smallest pitch circle radius R₂) is also correct when the corner or edge portion of the vane, as said, is fixed in the jig with a determined angle on the low pressure side, which for turbines is the outlet angle (β₂ respectively β₁ for the high pressure side), and pitch circle radius (R₂ respectively R₁) is correct, and the angle to the normal plane parallel with the vane angle is also correct.

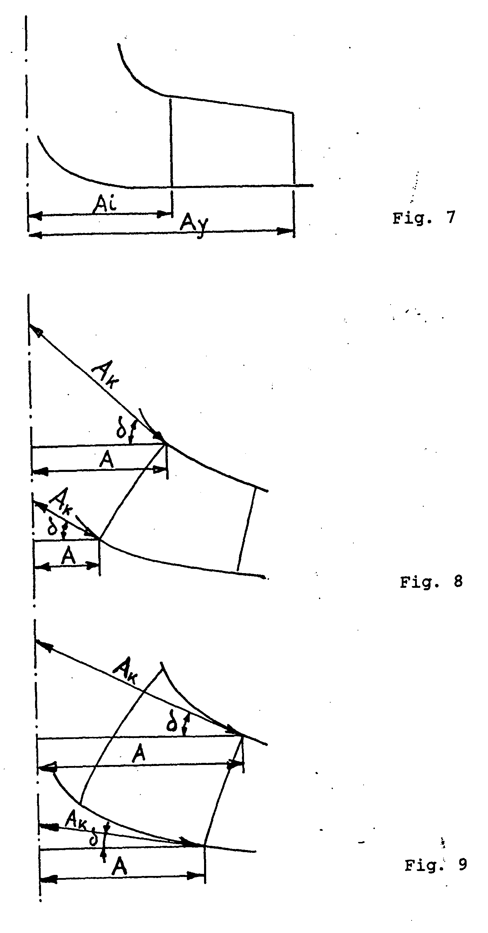

For additional illustration in connection with water turbines of radial type, fig. 7 shows a vane between the runner boss (or hub) and ring, where Aᵢ respectively A_{y} is specified for respectively radially inner edge portion and radially outer edge portion or point for dimension A generally given above.

For a conical or curved contour at the vane end, illustrated on figures 8 and 9, the distances Aₖ will form an angle equal to the vane angle β. The distance B is not affected by the conicity and is shown on figures 3 and 5 for fig. 8 and on figures 4 and 6 for fig. 9. The distance A which in that case is to be adjusted in the mounting jig, should be calculated as Aₖ*cosδ in order to get a correct vane angle β, where δ is the cone angle shown on these two figures.

It is evident from the above that the mounting jig according to the invention can be used for all types of geometries with curved radial/axial boss and runner rings and also in case of curved and double-curved vanes. All that is explained here in connection with water turbine runners, will also be applicable correspondingly for other types of structures or constructions such as pumps and fans, etc., where similar geometrical relationships occur during fixing and fastening of vanes on a rotor or the like.

## Claims

1. A mounting jig for fastening vanes and blades on runners in turbines, rotors in pumps, compressors and fans, etc., in which the vanes or blades are to be placed with a given angle in relation to the tangent of a pitch circle (R1,R2) which is defined by a radially inner respectively outer edge portion or point on each of the vanes/blades, and which has its centre on the rotational axis of the runner;
**characterised in that**:
the jig comprises a main spindle (1) arranged to be positioned to coincide with the rotational axis;
there is provided a transverse spindle (3) extending laterally from the main spindle (1) and attached thereto by an angle head (2);
the transverse spindle (3) supports a fixing head (4) having a general plane (10) lying perpendicular to (normal to) the transverse spindle and at a given radial distance (A) from the axis of the main spindle (1); and,
the fixing head (4) comprises attachment means (6) for fixing of a vane/blade with the radially inner respectively outer edge portion/point at a given distance (B) from the axis of the transverse spindle (3) and measured in a plane perpendicular to (normal to) the axis of the main spindle (1).

2. A mounting jig according to claim 1,
wherein the angle head (2) is adjustable along the main spindle (1).

3. A mounting jig according to claim 1 or 2,
wherein the angle head (2) comprises means for adjustment of selected angular positions in relation to the main spindle (1).

4. A mounting jig according to any one of the preceding claims,
wherein the fixing head (4) is adjustable along the transverse spindle (3).

5. A mounting jig according to any one of the preceding claims,
wherein the fixing head (4) is rotateable and adjustable about the axis of the transverse spindle (3).

6. A mounting jig according to any one of the preceding claims, wherein the transverse spindle (3) extends at a right angle from the main spindle (1).

7. A mounting jig according to any one of the preceding,
wherein the axis of the transverse spindle (3) intersects the axis of the main spindle (1).

8. A mounting jig according to any one of the preceding claims, wherein the fixing head (4) comprises a plate member (5) lying in said general plane (10) perpendicular to (normal to) the transverse spindle (3).

9. A mounting jig according to claim 8,
wherein the plate member (5) is arranged to be exchangeable and preferably adjustable on the fixing head (4).

10. A mounting jig according to any one of the preceding claims, wherein there is provided a planar table (9) for clamping a runner with the main spindle (1) perpendicular to (normal to) and preferably centred on the table plane.
